# EUROPEAN PATENT APPLICATION

(11) **EP 3 816 973 A1**
(43) Date of publication of application: **05.05.2021**
(21) Application number: 18919396.4
(22) Date of filing: 26.06.2018
(51) Int. Cl.: G09B 23/18

(54) **ROBOT LEARNING TOOL**

(71) Applicant: Nihon Business Data Processing Center Co., Ltd., Kobe-shi, Hyogo 650-0032 (JP)
(72) Inventor: IKE, Tomotaro, Kobe-shi, Hyogo 6500032 (JP)
(74) Representative: Sajda, Wolf E.
(86) International application number: PCT/JP2018/024159
(87) International publication number: WO 2020/003372

(57) **Abstract**

An object of a robot educational material (1) is to acquire a mechanism of a robot (10). The robot educational material (1) includes the robot (10) for which middleware for hardware input-output (22) is usable, and a textbook (40) including at least a manual (45) for operating the robot (10) as desired.

## Description

### TECHNICAL FIELD

The present invention relates to a robot educational material including a robot for which middleware for hardware input-output is usable, and a textbook including manuals of the robot and the like.

### BACKGROUND ART

Robots are utilized in various fields in recent years. Robot users use robots which conform to purposes of the users, thereby realizing efficiency of routine work, and artificial intelligence is provided for the robots, thereby enabling to improve efficiency of works by making the robots do even high-level works which require much time to acquire.

Development engineers developing such robots are able to easily conduct development itself by mounting an operating system (OS) for instant processing and middleware for hardware input-output for easily accessing input-output of sensors and motors. A robot operating system (ROS) is widely used as such middleware for hardware input-output (for example, see Patent Document 1).

The ROS is created for a purpose of simplifying production of an input-output program for the robots, and is mainly positioned as an input-output driver involved with various types of hardware, and is configured to include various libraries involved with access of the hardware. In other words, a core part of the ROS has a role of a control tower to control communications between nodes of the hardware which is to be an object of the ROS.

By using such an ROS, robot developers are not required to directly access different types of hardware by executing a different procedure for each hardware within the program, and are able to obtain information from the sensor and to drive the motor by a simple procedure.

### Citation List

### Patent Document

Patent Document 1: Japanese Unexamined Patent Application Publication JP 2018-018 502 A

### SUMMARY OF INVENTION

### Problems to be Solved by the Invention

Although robots are easily developed in this manner, learners aiming to be the robot developers are far from acquiring a mechanism of the robot only by using (operating) the robot. Thus, even if the learners who attempt to develop the robot are able to fully use the robot, the learners, however, are unable to easily start to develop the robot.

Also, although the learners of robot development understand to some extent that, for example, the motor is controlled in accordance with an input value of the sensor by observing robot operation, the learners are unable to know specifically how such a program is created.

Also, with respect to the ROS, the robot, which is compatible with the ROS, exists, but the robot is not for learning, and a textbook in pairs with the robot does not exist to make the learners learn easily. Thereby, the learners as well as instructors have a large obstacle.

It is hoped that the learners of the robot development have footholds in the robot development by using the robot, but, as described above, a robot itself or a robot educational material capable of taking a role as a textbook for learning does not exist conventionally.

The present invention is proposed by considering such circumstances, and an object of the present invention is to provide a robot educational material in order for the learners of the robot development to learn the mechanism of the robots.

### Solution to the Problem

To attain the above-described object, a robot educational material of one aspect of the present invention is provided with a robot for which middleware for hardware input-output is usable, and a textbook including at least a manual for operating the robot as desired.

### Effects of the Invention

The robot educational material of one aspect of the present invention has the above-described configuration so that knowledge or a mechanism of the robot, such as knowledge about the middleware for hardware input-output, is acquired. In addition, not limited to the above, the knowledge of robotics based on various world standard technologies is acquired.

### BRIEF DESCRIPTION OF DRAWINGS

- FIG. 1: is a schematic view showing a configuration of a robot educational material according to one embodiment of the present invention.
- FIG. 2: is a schematic block diagram showing an example of basic control of a robot included in the robot educational material.
- FIG. 3: shows a table of contents of a textbook included in the robot educational material.
- FIG. 4: is a schematic view showing a configuration of the robot educational material according to another embodiment of the present invention.

### DESCRIPTION OF EMBODIMENTS

Embodiments of the present invention are described below with reference to the attached drawings.

A plurality of embodiments are disclosed below, and common items in the embodiments are firstly described.

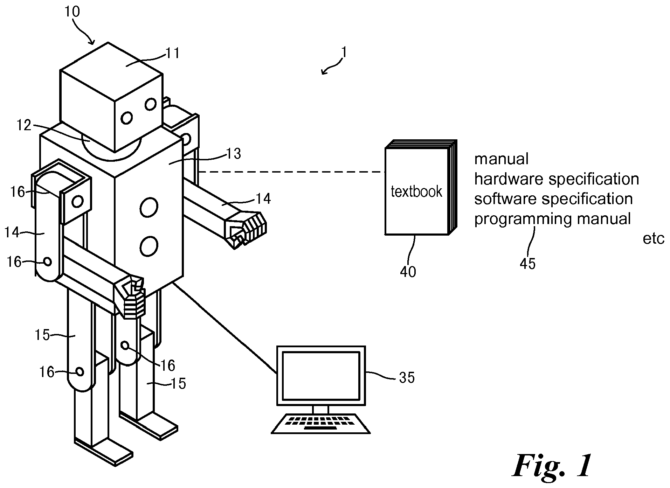

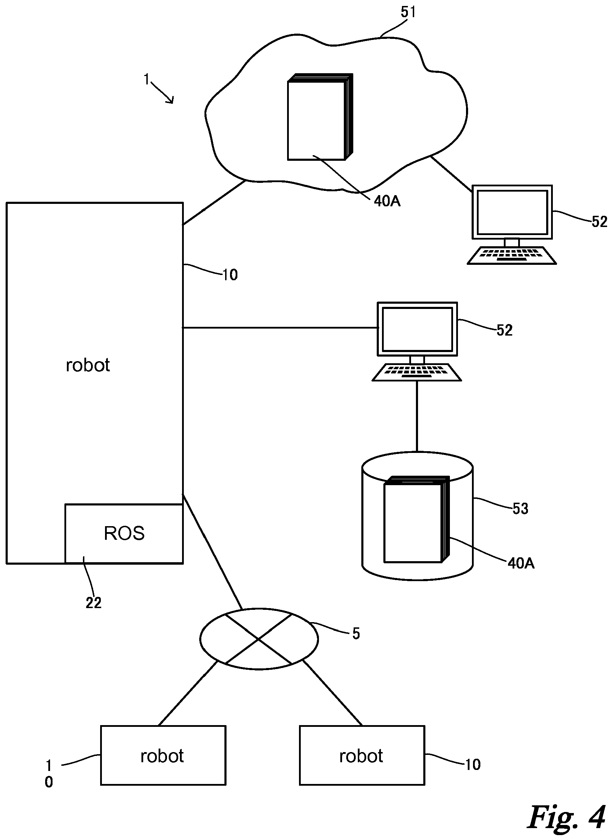

A robot educational material 1 includes a robot 10 for which middleware for hardware input-output 22 is usable, and a textbook 40 including at least a manual for operating the robot 10 as desired (see FIG. 1 and FIG. 4).

The robot 10 here includes, in addition to a human-type autonomous robot described below as the embodiment, an animal-type robot, an industrial robot, and a robot 10 operated by a remote operation. The robot 10 has an outer frame (a frame) according to a purpose, a drive mechanism to operate the robot (a motor 32), and a detection mechanism (a sensor 31).

The object of the robot educational material 1 is to have learners of robot development learn a mechanism of controlling the robot 10 in an easy-to-understand manner by reading the textbook 40 carefully, and the robot educational material 1 is an introductory teaching material for those who are aiming for the robot development by using this robot educational material 1.

Since the robot educational material 1 has such an object, by providing the user (the learner) with an unfinished robot 10, the learner can complete the robot 10 as an operable robot so as to operate the robot 10 as desired, or the learner can create an application program 23 to operate the robot 10. In short, the robot educational material 1 can be a robot kit including a teaching material (the textbook 40).

The middleware for hardware input-output 22 can be installed on a network 5 (see FIG. 4) so that the middleware for hardware input-output 22 can be used by the robot 10, but, in the embodiment below, the middleware for hardware input-output 22 is mounted on a body of the robot 10. When the robot 10 is used alone, the middleware for hardware input-output 22 is desirably mounted on every robot 10.

The middleware for hardware input-output 22 is an intermediary between hardware mounted on the robot 10 (such as a sensor 31, and a motor 32) and the application program 23. An ROS 22 (robot operating system), which is widely used in recent years, is used in the robot 10 of this embodiment, but the middleware for hardware input-output 22 is not limited thereto, and any other middleware can be used. As long as the middleware can be used as an input-output driver, any middleware can be used.

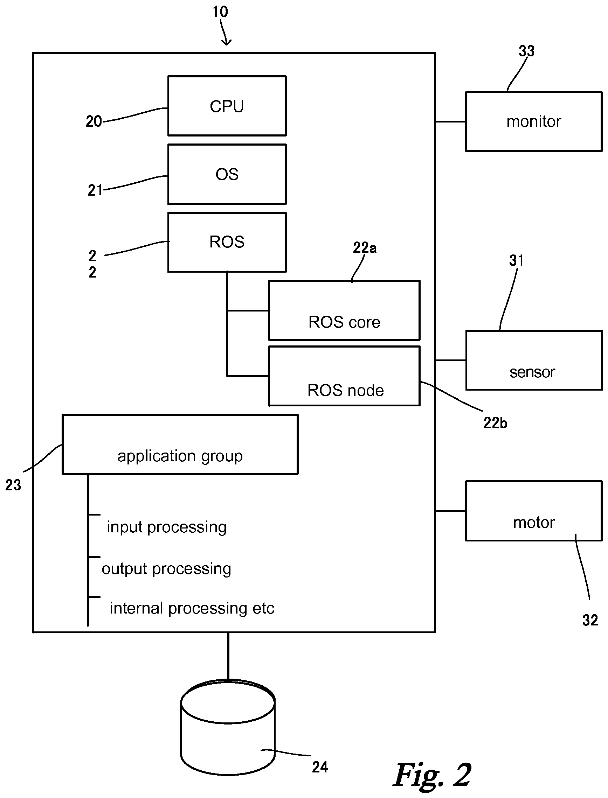

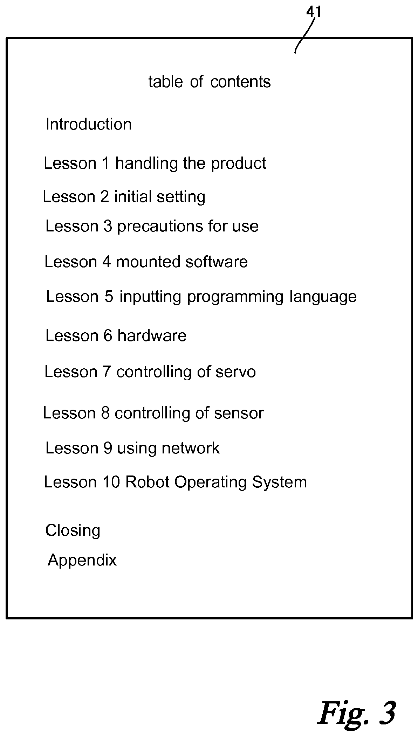

Firstly, the robot educational material 1 shown in FIG. 1 is described. FIG. 1 is a schematic view showing a configuration of the robot educational material 1. FIG. 2 is a schematic block diagram showing basic control of the robot 10 included in the robot educational material 1. FIG. 3 shows a table of contents in the textbook 40 included in the robot educational material 1.

The robot 10 shown in FIG. 1 is a human-type robot having frames, such as a head part 11, a neck part 12, a torso part 13, an arm part 14, and a leg part 15. Various parts, such as the arm parts 14 and the leg parts 15, have corresponding joint parts 16, and the robot 10 has a skeleton capable of moving almost in the same manner as human being, for example, turning and bending the head part 11, bending of the joint parts 16, standing-up and standing on one leg.

An electronic substrate mounting electronic components, such as a CPU 20, is mounted inside the torso part 13 of the robot 10. The detection mechanism (the sensors 31, such as an axial acceleration sensor, an ultrasonic distance sensor, and a camera), the drive mechanism (motors 32, such as an actuator and a servo motor), and a monitor 33 (such as LCD and LED) are mounted on each region of the frame in accordance with the purposes.

Alternatively, the robot 10 is used as a machine for developing a robot. Thus, the robot 10 has a terminal (not shown) so as to be able to connect a peripheral device 35, such as a keyboard. Needless to say, the robot 10 has a battery and a cable.

FIG. 2 is a block diagram showing a configuration of basic control of the robot 10. As shown in FIG. 2, the robot 10 includes the CPU 20, an OS 21 (operating system), the ROS 22, an application program group 23, a memory section 24, the motor 32, and hardware such as a wired or wireless communication device (not shown).

The CPU 20 is not particularly limited, but, needless to say, the CPU 20 is required to be compatible with the OS 21 and the ROS 22 used in the robot 10.

The OS 21 is not limited, as long as the OS 21 is at least capable of a multitask operation (an immediate operation). The OS 21 desirably includes a library available to the user. For example, Linux (registered trademark) is a widely used library in recent years.

The ROS 22 is, as described above, the middleware for hardware input-output 22, and is packaged software playing the intermediary role between the hardware and the application program 23. The ROS 22 also desirably includes the library available to the user.

In order to operate the robot 10 as desired, the ROS 22 is required to be generated into a usable form by using the application program 23. The ROS 22 includes an ROS core 22a which has a role of the control tower to coordinate communication with the hardware to be an object of input-output, and an ROS node 22b (a program group) which is a minimum component of the ROS 22 and is generated as an execution program at every individual processing.

The ROS 22 and particularly the ROS core 22a are not necessarily required to be mounted inside the body of the robot 10, but can be installed on a network 5 (see FIG. 4 to be described below) where the robot 10 is connectable.

The application program 23 includes an input-output program using the ROS 22 to operate the robot 10 and a program for internal processing according to the purpose.

Additionally, the robot 10 is mounted with the storage section 24 such as a memory and a recording disk having a disk file and a database which stores data generated by above-described various types of software and pre-generated data.

On the other hand, the textbook 40 is a so-called operation manual, but additionally includes a manual for operating the robot 10 as desired. Specifically, as shown in FIG. 1, the textbook 40 includes a manual of specifications of the mounted hardware and software (basic software such as the OS 21), and a manual of the configuration of the ROS 22 and examples of programming by using the ROS 22.

The textbook 40 further includes a programming procedure and sample programming by using the ROS 22. In short, the textbook 40 includes a manual for generating a program by using the ROS 22.

In such a manner, although the textbook 40 is specialized in the robot 10 included in the robot educational material 1, the textbook 40 can be used as an introductory book for development of the program for accessing the hardware particularly by using the ROS 22. Further, the textbook 40 can include robot technology based on any other world standard technologies, and general textbooks of control engineering, electronic engineering, and mechanical engineering (the introductory book, a technical book).

FIG. 3 shows an example of a table of contents 41 of the textbook 40. Contents of the textbook 40 are described with reference to the table of contents 41. The textbook 40 is regarded as a general operation manual, and specifically includes handling of the product (Lesson 1), initial settings (Lesson 2), and precautions for use such as care (Lesson 3).

Also, the textbook 40 additionally includes explanations of the OS 21 and language (Lesson 4), examples of control programming using the language (Lesson 5), and specifications of hardware and an example of access of the hardware in a program level (Lessons 6 to 9).

Further, the textbook 40 describes a summary of the ROS 22 and an example of use of the ROS 22 in a command level (Lesson 10). The use of the ROS 22 in the command level is a method of inputting desired hardware (for example, the sensor 31) with interactive commands by a peripheral device 35 (such as a keyboard). In addition to a method of inputting in the command level, the textbook 40 explains a method of inputting on a program code.

Specifically, by using the ROS node 22b having an information transmission function (collectively referred to as a Publisher) included in the ROS 22, and the ROS node 22b having an information receiving function (collectively referred to as a Subscriber), a desired value of the sensor 31 is obtained, and an example thereof is shown in the command level and the program level.

The learner stores information from any sensor 31 in a variable in the ROS core 22a by executing the Publisher, and freely sets a frequency of updating the variable. Then, how to encode the variable as a program is disclosed as an example of the program, and the learner, by referring to the code, understands how to access (input-output) the hardware in the program level (instruction word).

Also, the learner, by using the Subscriber, obtains the information periodically updated in the ROS core 22a at an optionally set frequency, and understands how to encode the information as the program by referring to the example of the programming. The example of the programming involved in the control of the motor 32 based on the obtained sensor value is also disclosed.

Since the textbook 40 has a manual for creation of the program by using the ROS 22 in this manner, the mechanism is made clear as if the robot 10 (particularly, the ROS 22) is disassembled, and, as a result, the learner deepens his or her understanding of the ROS 22. Also, trial programming is performed, and the learner learns basics of the operation of the robot by training with use of a real machine.

Further, as shown in FIG. 4, the textbook has a command reference as an appendix, simplified rules of the language to be used, and simple example programs using the simplified rules of the language.

In this manner, since the textbook 40 discloses the mechanism of the robot 10 corresponding to the robot 10 included in the robot educational material 1, the textbook 40 is used as a simplified teaching material for fostering the robot developers. Alternatively, not only part of the programs, but all programs can be disclosed in the code level, and can be represented by corresponding to the ROS 22 or control operations. Further, the textbook 40 can include general knowledge of robotics and contents with a level of the technical book.

As described above, according to the robot educational material 1, the robot learner is able to comprehensively learn the world standard technology and next-generation technology without creating an environment and preparing a curriculum for leaning the robot technology.

Also, the textbook 40 can be electronic data as shown in FIG. 4 of another embodiment. Electronic textbook data 40A can be posted in a cloud 51, and thereby the learner can refer to the electronic textbook data 40A by other electronic devices. Alternatively, the electronic textbook data 40A can be stored in a storage media 53 of the electronic device 52, such as a specific personal computer, or on the network, as well as in the robot 10.

Also, the electronic textbook data 40A can be stored so as to be readable by the electronic device 52. As shown in the drawing, assuming that the storage media 53 is connectable so as to be able to access from the robot 10, when the ROS 22 is updated by a change of the hardware, the text data can be timely updated accordingly. The electronic device 52 storing the textbook 40 can be, for example, a remote controller which remotely operates the robot 10.

In this embodiment, a plurality of the robots 10 are connected via the network 5, and the ROS 22 is mounted on one of the robots 10 that is a master machine. Such s single ROS 22 enables a plurality of the robots 10 to be operated individually.

In the above explanations, although the robot 10 prepared with the software, such as the OS 21, the ROS 22, and the application program 23, is described, the robot educational material 1 can be such that all or part of the software is generated by the learner. In short, the robot 10, which mounts only the sensor 31 and the motor 32, is not necessarily required to be operated as the robot 10.

For example, the robot 10, which mounts the sensor 31 and the motor 32, does not necessarily require an allocation to the ROS 22. In this case, in order to support the allocation to the ROS 22, the textbook 40 and the electronic textbook data 40A can include a worksheet for a list corresponding to input-output where the learner can write.

Also, the learner can create and install the application program 23. In this case, the textbook 40 can include procedures, such as generation and update of the OS 21 to associate a created program with the OS21.

In this manner, in case of the robot educational material 1 by which the learner makes the software to be operable and produces the robot 10 by the above-described procedures, after the robot 10 is completed, the robot can have a command or a switch capable of resetting the robot to an initial state so as for other learners to learn in the same way. For example, the OS 21, the ROS 22, and the application program 23 can be respectively reset.

Alternatively, the robot 10 can be an artificial intelligence (AI) type robot. The robot 10 has a decision-making engine for autonomous operation by using AI (not shown), and a summary of the operation based on the decision-making engine can be stored in the electronic textbook data 40A or the database. The robot 10 is configured to learn and acquire various knowledges, and the operation based on acquired results can be updated to the electronic textbook data 40A and the database.

### Description of Reference Signs

- 1: robot educational material
- 5: network
- 10: robot
- 11: head part
- 12: neck part
- 13: torso part
- 14: arm part
- 15: leg part
- 16: joint part
- 20: CPU
- 21: OS
- 22: ROS (middleware for hardware input-output)
- 22a: ROS core
- 22b: ROS node
- 23: application program (group)
- 24: storage section
- 25: decision-making engine
- 31: sensor
- 32: motor
- 33: monitor
- 35: peripheral device
- 40: textbook
- 41: table of contents
- 51: cloud
- 52: electronic device
- 53: storage media

## Claims

1. A robot educational material,
comprising:
- a robot for which middleware for hardware input-output is usable; and
- a textbook including at least a manual for operating the robot as desired.

2. The robot educational material according to claim 1,
wherein the middleware for hardware input-output is provided for the robot.

3. The robot educational material according to claim 1 or 2
wherein the textbook includes a manual for creating a program using the middleware for hardware input-output.

4. The robot educational material according to any one of claims 1 to 3,
wherein the textbook is electronic data, and the textbook is readable on an electronic device.
